# EUROPEAN PATENT APPLICATION

(11) **EP 0 570 347 A2**
(43) Date of publication of application: **18.11.1993**
(21) Application number: 93850079.0
(22) Date of filing: 08.04.1993
(51) Int. Cl.: B60R 21/26

(54) **Gas generator**

(30) Priority: 14.05.1992 SE 9201519
(71) Applicant: Bofors Explosives AB, S-691 86 Karlskoga (SE)
(72) Inventor: Hafstrand, Anders, S-691 54 Karlskoga (SE); Sandström, Jörgen, S-691 45 Karlskoga (SE); Sjöberg, Per, S-691 41 Karlskoga (SE)
(74) Representative: Falk, Bengt

(57) **Abstract**

The invention relates to a method and an apparatus which makes it possible to employ gas-emitting substances (7) with greatly pressure-dependent combustion properties in active collision protection of the so-called air-bag type. The problem has been solved by means of a special valve (12) which ensures that a substantially constant pressure is maintained in the combustion chamber of the air-bag unit.

## Description

### TECHNICAL FIELD

The present invention relates to a method and an apparatus which makes it possible to utilize such products as are clearly pressure-dependent for their combustion as gas-emitting substance in active collision protection of the air-bag type.

### BACKGROUND ART

As the gas-emitting substance in the increasingly common air bag assemblies, use has hitherto primarily been made of pyrotechnical mixtures based on potassium or sodium azide or alternatively nitrocellulose-based double basic powder. These products have perse functioned fully satisfactorily but they age relatively quickly, above all in warm climates, and for this reason air-bag units charged with these types of gas-emitting substances cannot be expected to attain the same service life as a normal private car.

However, it is proposed in Swedish patent application No. 9200223-7 that instead of using azides or double-base powder use should be made of crystalline high-energy explosives of the types RDX, HMX, PETN, NTO, TAGN or TATB as the principal gas former in the gas generators of the air-bag units. It is also presupposed in this application that energetic or non-energetic binders should also be included in an amount of between 5 and 50 percent by weight. Moreover, mention is made of certain additional smaller additives such as up to 5 per cent by weight of nitrocellulose, small amounts of plasticizer etc.

The general types of main gas former proposed in this application thus lie, in product terms, very close to the so-called "plastic-bound explosives" (PBX) and the so-called LOVA powders. The difference between these products is partly to be found in the crystal size of the explosives included, of which PBX contains high-energy explosives with an average particle size of 1-2 mm and the LOVA powders have a corresponding average particle size of 1-20 µm.

Generally speaking, products of the above- mentioned more recent types display a slower combustion speed than the nitrocellulose powder and the azides. Consequently, the combustion area must be increased for a corresponding gas production as compared with that area which was employed in prior art types of gas-emitting substances. In addition, these more recent types of gas-emitting substances display combustion speeds which are clearly pressure-dependent, which may give rise to problems in the form of uneven or excessively slow gas emission, or alternatively in that the gas emission is extinguished completely when the combustion gases formed in the initial combustion stage depart from the combustion chamber of the gas generator and begin to inflate the air bag, at which point the pressure in the combustion chamber may fall dramatically.

### BRIEF SUMMARY OF THE INVENTION

According to the present invention, this potential problem has been obviated in that the combustion chamber of the gas generator is provided with a throttle valve spring-loaded towards the closed position and whose opening characteristics have been adapted to the combustion and gas-emitting properties of the gas-emitting substance.

This arrangement enables the combustion pressure to be adapted to a predetermined level, since the thus formed combustion gases force the valve back to a more or less open position as soon as the internal pressure exceeds a predetermined threshold level, whereupon a pressure discharge takes place which, however, is never greater than the desired minimum pressure can be maintained in the combustion chamber of the gas generator, since the valve closes as soon as the desired minimum pressure is no longer reached. As soon as the pressure increases, the opening sequence recommences.

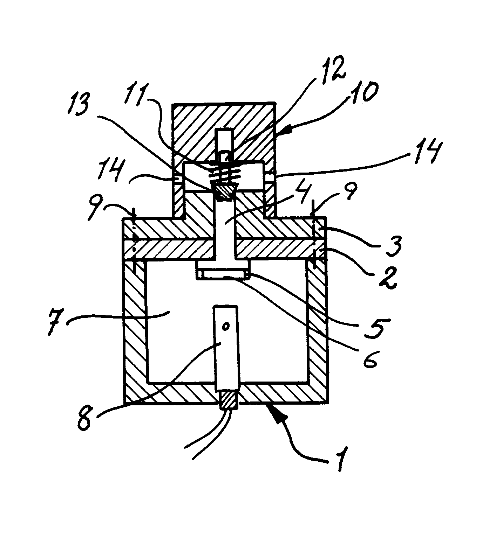

The method and the apparatus according to the present invention will now be described in greater detail hereinbelow, with particular reference to the accompanying Drawing which is a cross-section illustrating a gas generator of the type under consideration here.

This consists of the gas generator 1 proper, with an intermediate lid 2, a lid 3 with gas outiet4, a spacer ring 5 with a mesh 6 which keeps the gas generator's contents of gas-forming substance 7 away from the gas outlet 4. In the gas generator, there is moreover disposed an igniter 8. The gas generator is held together by the bolt 9. Avalve body 10 is disposed over the gas outlet 4, in which body there is disposed valve 12 which is biased by a compression spring 11 and which, with its valve cone 13 in the normal position, blocks the gas outlet 4. Moreover, outlets 14 are provided in the valve body 10, via which outlets the combustion gases are distributed to the air-bag unit contemplated here but not shown on the Drawing.

When the gas-emitting substance 7 is ignited by the igniter 8, the pressure in the gas generator increases so that the valve 12 opens, the gas pressure then being relieved and the valve closing in order once again to open when the pressure increases once more.

Correctly adapted, a gas generator of this type will provide a continuous gas emission in which only the pressure in the combustion chamber fluctuates somewhat around the most advantageous combustion pressure, while the valve 12 varies between more or less opened positions.

The present invention should not be considered as restricted to that described above and shown on the Drawing, many modifications being conceivable without departing from the spirit and scope of the appended claims.

## Claims

1. In gas generators for air-bag units, a method of maintaining the most uniform possible combustion speed for gas-emitting substances which are pressure-dependent for their combustion, characterized in that the combustion of the gas-emitting substance is conducted in a combustion chamber whose gas outlet has been closed by means of an elastically counterpressure-loaded throttle valve whose counterpressure has been adjusted so that it keeps the outlet closed up to and including a minimum desired combustion pressure, in order thereafter progressively to open the outlet to maintain constant pressure in the combustion chamber.

2. An apparatus to achieve in active collision protection of the air-bag type in accordance with the method as claimed in Claim 1 the most uniform possible combustion speed for the gas-emitting substance with whose combustion gases the air-bag unit is activated, comprising a combustion chamber (1) in which the said gas-emitting substance (7), on its combustion, is to be combusted and to which the air-bag unit has been connected, and an outlet (4) connected to said combustion chamber (1) and leading to the air-bag unit, and an igniter (8) disposed in connection with said gas-emitting substance, characterized in that there is disposed, in said outlet (4), a throttle valve (12) which is spring-biased towards its closed position in a direction towards the chamber and whose loading in towards the closed position has been adapted to the minimum desired combustion pressure within the chamber (1).

3. The apparatus as claimed in Claim 2, characterized in that the stroke length and opening area of the throttle valve (12) have been adapted to the combustion properties of the gas-emitting substance.
